# EUROPEAN PATENT SPECIFICATION

(11) **EP 2 959 145 B1**
(45) Date of publication and mention of the grant of the patent: **29.03.2017**
(21) Application number: 14704800.3
(22) Date of filing: 17.02.2014
(51) Int. Cl.: F02G 5/02, F02B 47/08

(54) **SYSTEM FOR RECUPERATING HEAT FROM THE EXHAUST GASES IN AN INTERNAL COMBUSTION ENGINE, WITH TWO HEAT EXCHANGERS ON A GAS RECIRCULATION CIRCUIT**
SYSTEM ZUR RÜCKGEWINNUNG VON WÄRME AUS DEN ABGASEN IN EINEM VERBRENNUNGSMOTOR MIT ZWEI WÄRMETAUSCHERN IN EINEM GASRÜCKFÜHRUNGSKREISLAUF
SYSTÈME DE RÉCUPÉRATION DE CHALEUR PROVENANT DES GAZ D'ÉCHAPPEMENT D'UN MOTEUR À COMBUSTION INTERNE, DOTÉ DE DEUX ÉCHANGEURS DE CHALEUR SUR UN CIRCUIT DE CIRCULATION EN CIRCUIT FERMÉ DES GAZ

(30) Priority: 20.02.2013 FR 1351434
(43) Date of publication of application: 30.12.2015
(73) Proprietor: Renault S.A.S., 92100 Boulogne-Billancourt (FR)
(72) Inventor: JACQUOT, Laurent, F-75015 Paris (FR); OLIVIER, Gérard, F-78380 Bougival (FR)
(86) International application number: PCT/EP2014/053001
(87) International publication number: WO 2014/128075

(56) References cited:
- WO-A1-2012/125155
- JP-A- 2007 239 513
- US-A1- 2011 041 814
- US-A1- 2011 139 131
- US-A1- 2011 239 996

## Description

The invention relates to a device for recuperating heat energy from an internal combustion engine. Vehicles equipped with internal combustion engines produce a large amount of heat energy which is sometimes used for heating the vehicle cabin and is generally dissipated via a cooling circuit comprising a radiator that is cooled by the air outside the vehicle. This energy can also be dissipated by the vehicle exhaust line. This energy is therefore lost from the vehicle and not put to productive use.

Energy recuperation systems based on circuits of state-change fluid subjected to a thermodynamic cycle corresponding to a Rankine cycle, or to a similar cycle, for example a Rankine-Hirn type cycle, have been proposed for recuperating some of the heat energy released by a vehicle engine. Some of the heat energy can thus be recovered in the form of mechanical energy, or of electrical energy produced from the mechanical energy.

This recuperated mechanical energy can be used directly to generate additional torque, thus improving the efficiency of the internal combustion engine and reducing the engine overall fuel consumption.

Thus, patent application FR 2 884 556 describes an energy recuperation system using a Rankine cycle, comprising an exchanger directly coupling the exhaust gas line and the Rankine circuit. Such a design of energy recuperation directly on the exhaust line poses problems of physical space. Furthermore, the exchangers involved need to be capable of withstanding very high temperature gradients and are therefore expensive to produce.

Patent application JP 2007 332853 proposes to recuperate heat energy from exhaust gases recirculated to the inlet side of an internal combustion engine using a water circuit that recuperates this heat energy and then gives it up to a Rankine circuit. This system represents a handicap in the recirculated gas temperature regulation, this then being a temperature that has to be managed as a compromise with optimizing the operation of the Rankine circuit.

Exhaust gas recirculation (EGR) is used to reduce the pollutants emitted by an internal combustion engine of the diesel type. What happens is that without EGR, incompletely burnt gases are found in the exhaust. EGR involves reintroducing these gases to the intake side of the engine. For maximum efficiency, the EGR gases need to be cooled. Now, in a high pressure gas recirculation system (often referred to as EGR HP), in which some of the burnt gases are returned from downstream of the engine cylinders to the intake side of the engine without passing either through the turbine or through the compressor of a turbocompressor, the recirculated gases are very hot (up to 800°C) and it is desirable to bring their temperature down to a temperature of around 150°C.

A very high water flow rate or a low water temperature has therefore to be provided in the EGR cooler. However, for good heat exchange efficiency, and to avoid the risks of plugging of the recirculation circuit, the water temperature needs to remain above 50°C. At the same time, to avoid destroying the cooler, it is necessary to prevent the water passing through it from boiling.

In order to be able to comply with future emissions standards, it is desirable to be able to use EGR:
- for low ambient temperatures: an EGR cooler through which coolant at low temperature passes may then present difficulties because the temperature of the water passing through it could drop below 50°C,
- for high loads: existing EGR coolers are not efficient enough.

JP2007-239513A discloses a system for recuperating energy for a motor vehicle equipped with an internal combustion engine in accordance with the preamble of claim 1.

In addition, fouling reduces the efficiency of the EGR coolers. To reduce this, it is desirable to limit the temperature gradient of the gases between the inlet and the outlet side of the exchanger.

It is an object of the invention to propose an energy recuperation system that allows better regulation of the temperature of the recirculated gases while at the same time limiting the extent to which the burnt gas recirculation circuit becomes fouled, so that heat energy can at the same time be recuperated from sources of heat other than the gas recirculation circuit and which further, during vehicle cold starts, allows the vehicle cabin to warm up quickly if the occupants of the vehicle require this.

To this end, the invention proposes a system for recuperating energy for a motor vehicle equipped with an internal combustion engine, in accordance with independent claim 1.

The second fluid circuit may be referred to as a Rankine circuit or as a Rankine-Hirn circuit because the cycle of the fluid circulating through this circuit can be likened to a thermodynamic cycle known by the name of Rankine cycle (if the fluid is vaporized in the first coupling exchanger then used at the saturated vapour temperature in the expansion machine), or by the name of a Rankine-Hirn cycle (if the fluid is vaporized in the first coupling exchanger, or "vaporizer" then heated above the saturated vapour temperature in a second coupling exchanger, or "superheater" before being sent into the expansion machine). The first coupling exchanger is usually denoted by the term "evaporator". For preference, the second cooling exchanger is - on the recirculation circuit - downstream of the first cooling exchanger with reference to the circulation of the recirculated gases.

The partial recirculation circuit may comprise a recirculation line of the EGR HP type returning some of the exhaust gases from downstream of the engine cylinders to an intake manifold of the engine or to the inlet of the engine cylinders without passing through a turbocompressor of the engine. According to other alternative forms of embodiment, the recirculation circuit may comprise a line of the EGR LP type, returning the exhaust gases to the inlet side of a turbocompressor.

According to the invention, the system comprises a thermostat configured so as to switch alternately between a first position in which the circulations of coolant through the first circuit and the third circuit are independent of one another, and a second position in which at least some of the liquid passing through the engine also passes through the second cooling exchanger. According to a preferred embodiment, the thermostat is configured to switch into the first position when the liquid temperature detected by the thermostat is below a threshold temperature, and to switch into the second position when the liquid temperature detected is above the same threshold temperature.

The third circuit may comprise a first radiator able to give up heat energy from the third circuit to the atmosphere outside the vehicle.

Advantageously, the first radiator is mounted in series with the second cooling exchanger. What that means is that the first radiator and the second cooling exchanger are situated on one and the same leg of the third circuit. All of the coolant passing through the radiator and/or respectively through the cooler, therefore passes through the cooler and/or respectively through the radiator, whether the thermostat be in the first or in the second position.

The third circuit may further comprise a second radiator able to give up heat energy from the third circuit to the atmosphere outside the vehicle, the second radiator being mounted in parallel with the second cooling exchanger, or, more specifically, so that it is in parallel with the second cooling exchanger when the thermostat is in the second position. What that means is that the radiator and the cooler are on two legs that have an upstream branch in common and a downstream branch in common, with respect to the direction in which the coolant circulates when the thermostat is in the second position.

According to one preferred embodiment, the third circuit comprises a first pump positioned in such a way as to direct the coolant from the first radiator to the second cooling exchanger. For preference, the third circuit is then dimensioned so that, when the thermostat is in the first position, a loop of coolant passing in succession through the first radiator, the second cooling exchanger and the third radiator is established. Advantageously, the third circuit may comprise a liquid reservoir configured to accommodate expansions of the coolant in the third circuit. For preference, the reservoir is positioned on the third circuit on a leg connected in parallel with a leg comprising the second radiator, and with another leg comprising the first radiator, the first pump and the second cooling exchanger. Advantageously, the third circuit also comprises an equalizing leg connected in parallel with the aforementioned three legs.

According to one preferred embodiment, the first circuit comprises a unit heater able to give up heat energy from the first circuit to the vehicle cabin air. The first circuit then defines a first coolant loop equipped with at least one pump configured to circulate the liquid of the first loop successively through the engine, the first cooling exchanger and the unit heater.

Advantageously, the first circuit further comprises a bypass leg connected in such a way that the coolant can be circulated through the first cooling exchanger then the unit heater, without passing via the engine. The bypass leg may essentially consist of an equalizing pipe bearing no exchanger, or may comprise an exchanger used for example for cooling part of the engine or part of its gas circuit. The bypass leg may contribute to defining a secondary loop for the circulation of coolant passing in particular through the bypass leg and through a pipe that passes through the first cooling exchanger and the unit heater. According to a preferred embodiment, the bypass leg may comprise a fourth cooling exchanger configured to transfer heat energy from the coolant passing through a gas regulating valve belonging to the recirculation circuit. According to one advantageous embodiment, the first circuit comprises an on/off valve positioned on the first liquid circulation loop, outside of the secondary liquid circulation loop. The second pump can then be positioned on the first circuit on a leg that is common to the first loop and to the secondary loop. Advantageously, the first circuit comprises a pump positioned on the first loop outside of the second loop. For preference, the on/off valve is positioned upstream of the engine. The on/off valve is operated, for example by an electronic control unit, to interrupt the circulation of coolant through the engine when the engine is performing a cold start.

The system may comprise a third cooling exchanger configured to transfer heat energy from an oil circuit or, more generally, from a lubricating fluid circuit, to the liquid of the first circuit. Advantageously, the third cooling exchanger may be positioned on the first loop upstream of the engine and outside of the secondary loop. Advantageously, the first circuit may comprise one or more equalizing legs to allow the flow rates of coolant and the directions in which this coolant circulates to be stabilized. A first equalizing leg may for example connect a point on the first loop situated between the engine and the first cooling exchanger to a point on the first loop downstream of the unit heater. The thermostat may advantageously be positioned on the first equalizing leg so as to allow liquid leaving the engine when the thermostat is in the first position to circulate and so as to cut off circulation of coolant through the first equalizing leg and send some of the liquid leaving the engine to the third circuit when the thermostat is in the second position.

A second equalizing leg may, for example, be connected in parallel with the second cooling exchanger.

The first circuit may further comprise a second coupling exchanger serving as a hot source for the second circuit. The second coupling exchanger, or superheater, is configured to allow heat energy to be given up by the first circuit to the fluid of the second circuit, already vaporized in the first coupling exchanger.

According to one particularly advantageous first embodiment, the first coupling exchanger is positioned on the first liquid loop, between the first cooling exchanger and the unit heater. If a second coupling exchanger is present, the first coupling exchanger is positioned on the first loop downstream of the second coupling exchanger with reference to the direction in which the liquid circulates through the first loop.

According to a second advantageous embodiment, the first coupling exchanger is positioned on the first loop, downstream of the engine and upstream of the first cooling exchanger.

According to a third advantageous embodiment, the first coupling exchanger is positioned on the first loop, downstream of the unit heater and upstream of the engine. For preference, in this embodiment, the first coupling exchanger is also positioned downstream of a fourth cooling exchanger of the first circuit, configured to transfer heat energy from the coolant passing through a gas regulating valve belonging to the recirculation circuit. The fourth cooling exchanger may for example be situated on a leg connecting the downstream side of the engine and the upstream side of the first coupling exchanger.

According to a fourth advantageous embodiment, the first coupling exchanger is placed on the first circuit in parallel with a leg comprising the first exchanger and the unit heater.

Another aspect of the invention proposes a method for managing energy employed by a motor vehicle internal combustion engine, in which use is made of a first coolant circuit that cools the engine to collect heat energy from an exhaust gas recirculation circuit of the vehicle and to transmit at least some of the collected heat energy to a second state-change fluid circuit. Use is made of a third coolant circuit, likewise able to collect heat energy from the gas recirculation circuit. The first circuit and the third circuit are connected when the temperature of the coolant leaving the engine is above a threshold temperature and coolant is made to circulate through the first circuit and through the third circuit independently, when that is not the case. According to one particularly advantageous embodiment, when the engine is performing a cold start, the liquid from the first circuit is made to pass through a vehicle cabin unit heater without being made to pass through the vehicle engine. For preference, the state-change fluid second circuit comprises an expansion machine configured to be able to supply mechanical energy to an output shaft of the internal combustion engine.

Other objects, features and advantages of the invention will become apparent from reading the following description, given solely by way of nonlimiting example and made with reference to the attached drawings in which:
- Figure 1 is a schematic view showing a motor vehicle engine equipped with an energy recuperation system according to the invention;
- Figure 2 is a view recalling the key elements of a state-change fluid circuit as used in an energy recuperation system according to the invention;
- Figure 3 is a schematic view showing a diagram of the circulation of coolant in an energy recuperation system according to the invention;
- Figure 4 is a schematic view showing another diagram of the circulation of coolant in an energy recuperation system according to the invention;
- Figure 5 is a schematic view showing another diagram of the circulation of coolant in an energy recuperation system according to the invention;
- Figure 6 is a schematic view showing yet another diagram of the circulation of coolant in an energy recuperation system according to the invention;
- Figure 7 illustrates one of the modes of operation of the energy recuperation system of Figure 3;
- Figure 8 illustrates another mode of operation of the energy recuperation system of Figure 3;
- Figure 9 illustrates yet another mode of operation of the energy recuperation system of Figure 3.

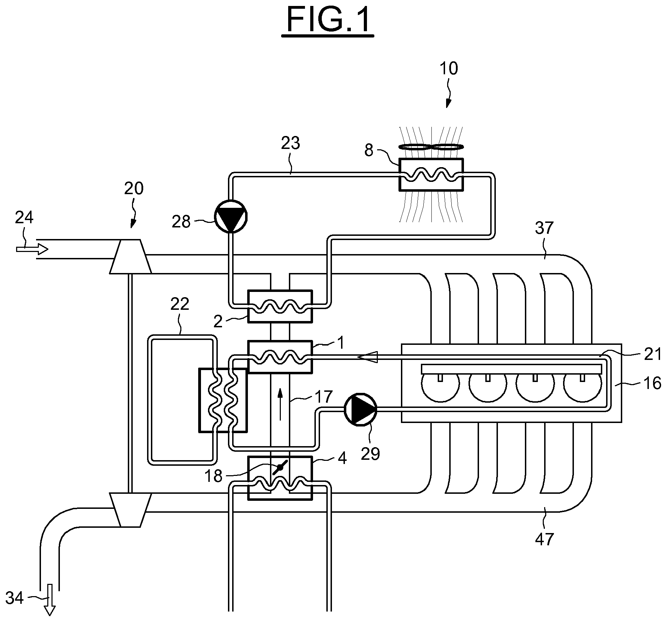

As illustrated in Figure 1, a system 10 for recuperating heat energy from an internal combustion engine 16 comprises a first cooling circuit 21 for cooling the engine 16.

The engine 16 is supplied with air from an air intake 24 that allows air from outside the vehicle to be aspirated by a compressor of a turbocompressor 20. The air is then sent to the intake manifold 37, from where the air is admitted to the various cylinders of the engine 16 to act as oxidant for the fuel injected into the cylinders.

The burnt gases are then expelled from the cylinders of the engine to an exhaust manifold 47. Some of these burnt gases are returned from the exhaust manifold 47 to the intake manifold 37 of the engine 16 via a burnt gas recirculation circuit 17. Another proportion of these burnt gases is guided towards the exhaust 34 of the engine 16, these as they pass driving the turbine of the turbocompressor 20.

The system comprises a first cooling exchanger referenced 1 and a second cooling exchanger referenced 2, both positioned in such a way as to transfer heat energy from the proportion of the burnt gases that is returned to the intake manifold 37 by the gas recirculation system 17. The second cooling exchanger 2 is mounted downstream of the first cooling exchanger 1 in the direction in which the gases flow.

The first cooling exchanger 1 can also, according to the literature, be referred to as the "hot EGR exchanger" and the second cooling exchanger is sometimes referred to as the "cold EGR exchanger".

The first coolant circuit 21 passes through the engine 16, the first cooling exchanger 1 and one or more "coupling" exchangers that allow the circuit 21 to give up heat energy to a second state-change fluid circuit 22. A pump 29 dictates the direction in which the coolant circulates through the first circuit 21, so that the coolant passes in succession through the engine 16, the first cooling exchanger 1 and the coupling exchangers common to the first circuit 21 and to the second circuit 22.

In the embodiment illustrated, the burnt gas recirculation is of the EGR (Exhaust Gas Recirculation) HP (High Pressure) type because the burnt gases are recuperated before they have passed through the turbine of the turbocompressor 20. The invention could equally be applied to a gas circuit that recirculates gases at low pressure (EGR LP), for example a circuit that takes these burnt gases off downstream of a turbine of a turbocompressor and reinjects them upstream of the compressor of the turbocompressor.

The system 10 comprises a third circuit which is also a cooling circuit, referenced 23, passing through the second cooling exchanger 2 so that residual heat energy can be transferred from the gas recirculation circuit 17, which means heat energy not removed by the first cooling exchanger 1 and that it is desirable to remove in order to obtain the desired gas temperature on the intake side of the engine 16. At least some of this heat energy collected by the third circuit is given up in a first radiator 8 present on the third circuit 23. A first pump 28 dictates the direction in which the coolant circuits through the third circuit 23. The total flow rate of recirculated gases to the intake manifold 37 is regulated by a valve 18, or EGR valve, the mechanism of which is cooled using a cooling exchanger referenced 4.

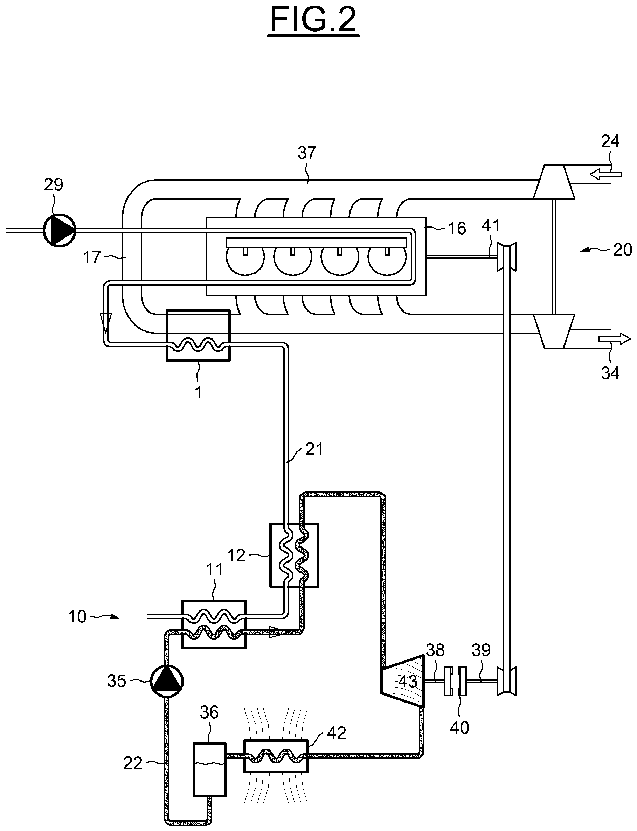

The principle of operation of the second circuit 22 is illustrated in greater detail in Figure 2. Figure 2 again shows elements common to Figure 1, the same elements being denoted by the same references. The second circuit 22, which may also be referred to by the name "Rankine circuit" or "Rankine-Hirn circuit", comprises a first coupling exchanger 11, or "evaporator", allowing heat energy to be transferred from the coolant of the first circuit 21 to a state-change fluid present in the second circuit 22 so as to vaporize this state-change fluid. The fluid of the second circuit 22, in the vapour state, then enters a second coupling exchanger 12 or "superheater" in order to further increase the temperature of the vapour obtained.

At the coupling exchangers 11 and 12, the coolant and the fluid of the second circuit circulate countercurrentwise with respect to one another in order to improve the efficiency of the exchanges of heat. In this arrangement, the second exchanger 12 thus has passing through it coolant that is hotter than the coolant that passes through the exchanger 11. In the second circuit 22, the vapour thus superheated is sent to an expansion machine 43 of which an output shaft 38 can be coupled to an output shaft 41 of the engine 16, for example using a system of pulleys. The system of pulleys may comprise a secondary shaft 39 rotating as one with the shaft 41 of the engine 16, for example attached thereto by a belt. The secondary shaft 39 may be positioned in such a way that it can be alternatively engaged and disengaged from the output shaft 38 of the expansion machine 43, using a clutch 40.

Once the vapour has passed through the expansion machine 43, it is cooled in a condenser 42 to return it to the liquid state. The liquid thus obtained is then sent to a bottle 36 where residual bubbles can be separated from the fluid. The liquid contained in the bottle 36 is repressurized and reinjected in the liquid and bubble-free state into the exchangers 11 and 12, by a pump 35. The second circuit 22 may be denoted a "Rankine circuit" or a "Rankine-Hirn circuit" because the fluid circulating through this circuit undergoes a thermodynamic cycle similar to the cycle known by the name of Rankine-Hirn cycle.

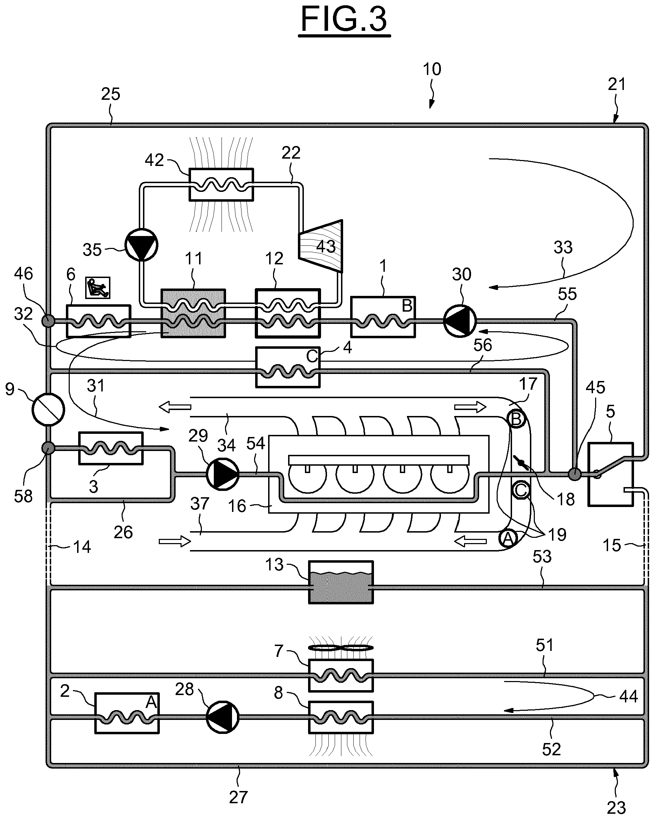

Figure 3 illustrates one possible configuration of cooling circuits in an energy recuperation system according to the invention. Figure 3 again shows elements that are common to Figures 1 and 2, the same elements then being denoted by the same references. Figure 3 again shows the first coolant circuit 21 and the third coolant circuit 23.

The third circuit 23 comprises the first pump 28 which is preferably an adjustable output pump, for example an electric pump, and is positioned in such a way as to be able to vary the amount of coolant passing through the second cooling exchanger 2. The pump 28 is dimensioned so as to make it possible to establish a circulation of coolant through the third circuit 23. The third circuit 23 comprises pipes 51, 52, 53, 27 through which this circulation may take place in at least one fluid loop, and preferably in several fluid loops. The directions of circulation through the various loops may vary notably according to whether the third circuit is connected to another cooling circuit or whether it is operating independently. The pump 28 and the second cooling exchanger 2 are positioned on one and the same pipe 52 in series with one another. The pipe 52 may also pass through the first radiator 8. The pipe 51, connected in parallel with the pipe 52, may pass through a second radiator 7.

The first coolant circuit 21 comprises the second pump 29 and a third pump 30. The second pump 29 is positioned in such a way that the flow rate of coolant passing through the engine 16 can be varied. The third pump 30 is positioned in such a way that the flow rate of coolant passing through the first cooling exchanger 1 can be varied. The first circuit 21 comprises pipes 54, 55, 56, 25 that allow fluid to be made to circulate in a first fluid circulation loop 31 passing through the pipes 54 and 55, in a secondary fluid circulation loop 32 passing through the pipes 55 and 56 or in several fluid circulation loops simultaneously. Circulation may, for example, be through a first secondary fluid circulation loop 32 and at the same time a second secondary fluid circulation loop 33 passing through the pipes 25 and 55. The pumps 29 and 30 are dimensioned to be able together to establish a circulation of fluid through the first circuit 21. The circulations of coolant through the first circuit 21 and through the third circuit 23 may be interconnected by two fluid pipes 14 and 15. The pipe 14 permanently connects the first circuit 21 and the third circuit 23, whereas the pipe 15 only sometimes connects the two circuits via a thermostat 5, depending on the position of the thermostat 5. The thermostat 5 is positioned downstream of the engine 16. "Downstream of the engine 16" means that liquid leaving the engine 16 arrives at the thermostat 5 without passing through other exchangers before arriving at the thermostat 5.

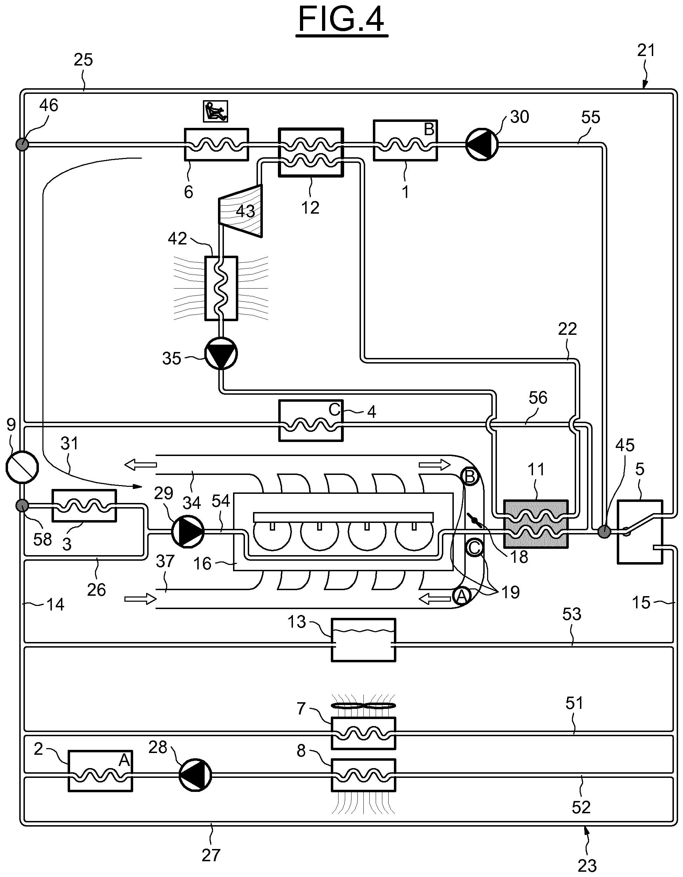

At the very most, in one special case illustrated in Figure 4, the fluid leaving the engine 16 may pass through a single exchanger, which in this particular configuration is the first coupling exchanger 11 that couples with the second circuit 22.

The inlet side of the thermostat 5 is connected in such a way that at least some of the liquid that has passed through the engine 16 can pass through the thermostat 5. The thermostat 5 may adopt at least two positions. When the thermostat 5 is in a first position, the fluid entering the thermostat 5 is directed towards the leg 25 of the first circuit 21. When the thermostat 5 is in a second position, the fluid entering the thermostat 5 is directed towards the connection leg 15, which sends the fluid to the third circuit 23. The thermostat 5 may be configured to be positioned in the first position when the temperature of liquid passing through it is below a threshold temperature, and to switch into the second position when the temperature of the liquid passing through it is above this threshold temperature.

The first fluid circulation loop 31 of the first circuit 21 comprises, in succession, from upstream to downstream when considering the direction in which the liquid circulates through this loop 31, the engine 16 on the pipe 54 then, on the pipe 55, the first cooling exchanger 1, and then an on/off valve 9.

Depending on the embodiment variants, the first loop 31 may also comprise, on the pipe 55, an exchanger 11 or 12 for coupling with the second circuit 22 (or two exchangers 11 and 12 for coupling with the second circuit 22). This/these coupling exchanger/s 11 and/or 12 are positioned between the first cooling exchanger 1 and the on/off valve 9. The second pump 29 may be situated on the same pipe 54 as the engine 16, and the third pump 30 may be situated on the same pipe 55 as the first cooling exchanger 1.

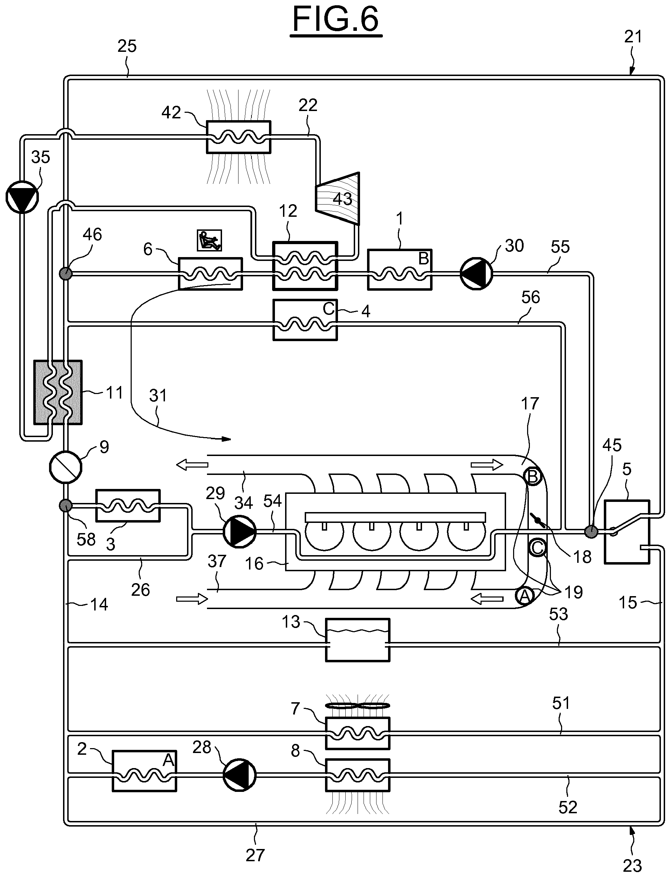

The first loop 31 may also comprise a unit heater 6, i.e. an exchanger able to give up heat energy from the coolant to a cabin of a motor vehicle. The unit heater 6 is on the pipe 55, between the exchanger 12 of the second circuit 22 and the on/off valve 9. The exchanger 11 may potentially be interposed between the exchanger 12 and the unit heater 6 (Figure 3) or between the unit heater 6 and the on/off valve 9 (Figure 6).

Returning more specifically to the example illustrated in Figure 3, the first loop 31 comprises, in order, from upstream to downstream, on the pipe 54, the second pump 29 then the engine 16, then, on the pipe 55, the third pump 30, the first cooling exchanger 1, the second coupling exchanger 12, the first coupling exchanger 11, the unit heater 6; finally there is the on/off valve 9 which may, for example, be positioned between the pipe 55 and the pipe 54.

The exchangers 11 and 12 are referred to here as "coupling exchangers" because they allow heat energy to be transferred from the first circuit 21 to the second circuit 22 able to, at least in part, convert this heat energy into mechanical work. The first circuit 21 acts as a coupling circuit coupling the cooled components, such as the engine 16, and the second circuit 22 or Rankine-Hirn circuit.

In the embodiment illustrated in Figure 3, there is also, on the first loop 31, a third cooling exchanger 3 allowing heat energy to be transferred from an oil circuit (gearbox oil and/or engine oil) to the coolant of the first circuit 21. The third cooling exchanger 3 is located here between the on/off valve 9 and the engine 16, upstream of the pump 29.

Still in Figure 3, to make it easier to establish steady-state flow of coolant, the first circuit 21 comprises a first and a third equalizing leg 25 and 26, these essentially consisting of pipes containing no specific components, or at least no components that introduce pressure drops other than that introduced by the pipe. The third circuit 23 comprises a second equalizing leg 27.

The first equalizing leg 25 comprises the inlet of the thermostat 5 and a first outlet of the thermostat 5. In other words, the equalizing leg 25 is passed through by the liquid leaving the engine 16 when the thermostat 5 is in the first position. This equalizing leg 25 connects in downstream of the unit heater 6, upstream of the on/off valve 9 - upstream/downstream being used in relation to the direction in which the fluid circulates through the first loop 31. The first equalizing leg 25 is connected in parallel to the pipe 54, to the pipe 55 and to the pipe 56. If the thermostat 5 is considered to belong to the equalizing leg 25, the pipes 25, 55 and 56 have a first common point of connection 45 at one end and a second common point of connection 46 at their other end.

The second equalizing leg 27 makes it possible to establish in the third circuit 23 a stream of coolant that is parallel to the streams passing through the pipes 51 and 52.

The third equalizing leg 26 makes it possible, on the first circuit 21, to bypass the third exchanger 3 by conveying fluid directly from the on/off valve 9 to the pump 29.

As can be seen from Figure 3, the pipes of the first circuit 21 define the aforementioned liquid circulation secondary loops 32, 33 along which a circulation of coolant can be established when the on/off valve 9 situated on the first loop is closed.

The first secondary fluid loop 32 may for example pass along the pipes 55 and 56 connected to one another at the first common connection point 45 and at the second common connection point 46 of the pipe 55.

The first common connection point 45 is situated between the engine 16 and the thermostat 5. The second common connection point 46, situated downstream of the unit heater 6 on the pipe 55, is upstream of the on/off valve 9 with respect to the direction of circulation in the loop 31. The second connection point 46 also corresponds to the end of the equalizing leg 25 which is the opposite end to the thermostat 5, and to the end of the pipe 56 which is the opposite end to its end that emerges from downstream of the engine 16.

The pipe 56 may comprise a fourth cooling exchanger 4 so that heat energy can be collected from the EGR valve 18, for example at a control box that operates the EGR valve 18, so as to keep the control electronics at a temperature that these electronics find acceptable. The secondary loop 32 defined by the pipes 55 and 56 passes in succession through the pump 30, the first cooling exchanger 1, at least one coupling exchanger 12 of the second circuit 22, possibly another coupling exchanger 11 of the second circuit 22, through the unit heater 6 and then through the fourth cooling exchanger 4 before returning to the pump 30.

The first circuit 21 may also define a second secondary loop 33 for the circulation of fluid when the valve 9 is closed. This second secondary loop 33 passes through the first equalizing leg 25. The liquid therefore circulates in succession through the pump 30, the first cooling exchanger 1, at least one coupling exchanger 12, possibly another coupling exchanger 11, through the unit heater 6 and through the equalizing leg 25, before returning to the pump 30. This second secondary loop 33 is of course operational only when the thermostat 5 is in the first position.

The third circuit 23 comprises a first cooling leg corresponding to the pipe 52, and on which there are at least the pump 28, the second cooling exchanger 2 and a first radiator 8 configured to give up heat energy from the coolant to the atmosphere. In the example illustrated in Figure 3, these elements are, in the following order from upstream to downstream - with respect to the fluid flow direction dictated by the pump 28: the first radiator 8, the pump 28 and the second cooling exchanger 2.

The third circuit 23 comprises at least one second cooling leg corresponding to the pipe 51 and making it possible to define, together with the first cooling leg, a fluid circulation loop 44 when the thermostat 5 is in the first position. This second cooling leg may for example comprise the second radiator 7. The radiator 7 is thus positioned in such a way that coolant from the engine 16 passes through it when the thermostat 5 is in the second position, and that fluid from the second cooling exchanger 2 passes through it when the thermostat 5 is in the first position. When the thermostat is in the second position, the second radiator 7 acts as the main cooling radiator that cools the engine 16.

When the thermostat 5 is in the first position, the circulation loop 44, established within the third circuit 23, passes in succession through the first radiator 8, the pump 28, the second cooling exchanger 2 and the second radiator 7.

The third circuit 23 may also comprise a coolant reservoir 13, configured to be able to accommodate expansions of the coolant in the third circuit. The reservoir 13 also makes it possible to accommodate simultaneously expansions of the coolant of the first circuit 21 and of the third circuit 23 when the two circuits are interconnected. The reservoir 13 may, for example, be situated under a pipe 53 of the third circuit running in parallel with the pipe 51 and the pipe 52.

Note: In order to provide, in Figure 3, a visual reminder of the positions occupied by the various cooling exchangers in relation to the gas recirculation circuit 17, the rectangles representing the second, the first and the fourth cooling exchangers bear indicator letters A, B, C. These letters allow the relative positions of the exchangers to be read off the same figure using three labels - referenced 19 - arranged on the schematic depiction of the gas recirculation circuit 17.

With respect to the direction in which the gases circulate, the second cooling exchanger 2, indexed with the letter A, is thus situated downstream of the first cooling exchanger, indexed with the letter B. The fourth cooling exchanger 4 for its part is associated with the regulating valve or the EGR valve 18 and is indexed with the letter C. It is usually, together with the valve 18, positioned between the first cooling exchanger 1 and the second cooling exchanger 2.

Figures 4 to 6 illustrate embodiments of the invention in which the positioning of the first coupling exchanger 11 differs from that of Figure 3. There are various possible options for the positioning, bearing in mind the fact that the coolant, when the valve 18 of the recirculation circuit 17 is open, acquires at least as much, and somewhat more, heat energy from the EGR exchanger 1 as by passing through the engine 16.

Figures 4 to 6 again show elements that are common to the preceding figures, the same elements being denoted by the same references.

In Figure 4, the first coupling exchanger 11, i.e. the evaporator of the second circuit 22, is not situated between the second coupling exchanger 12 and the unit heater 6. It remains interposed on the first circulation loop 31, and is situated immediately downstream of the engine 16. It is positioned on the loop 31, following the direction of circulation of the liquid, between the engine 16 and the first cooling exchanger 1. It is even, in Figure 4, upstream of the third pump 30 on the loop 31.

The first coupling exchanger 11 is also upstream of the point of connection 45 between the pipe 55 comprising the first cooling exchanger and the pipe 56 comprising the fourth cooling exchanger 4.

Thus, the coupling exchanger 11 already partially cools the coolant leaving the engine 16 before this liquid, by passing through the pump 30, reaches the first cooling exchanger 1. Thanks to this arrangement we have a first cooling exchanger 1 the liquid that passes through which is colder. The heat energy given up by the gases at the first cooling exchanger 1 can then be recuperated at the superheater 12 of the Rankine circuit to bring the temperature of the fluid in the Rankine circuit to a temperature higher than that acquired in the evaporator 11.

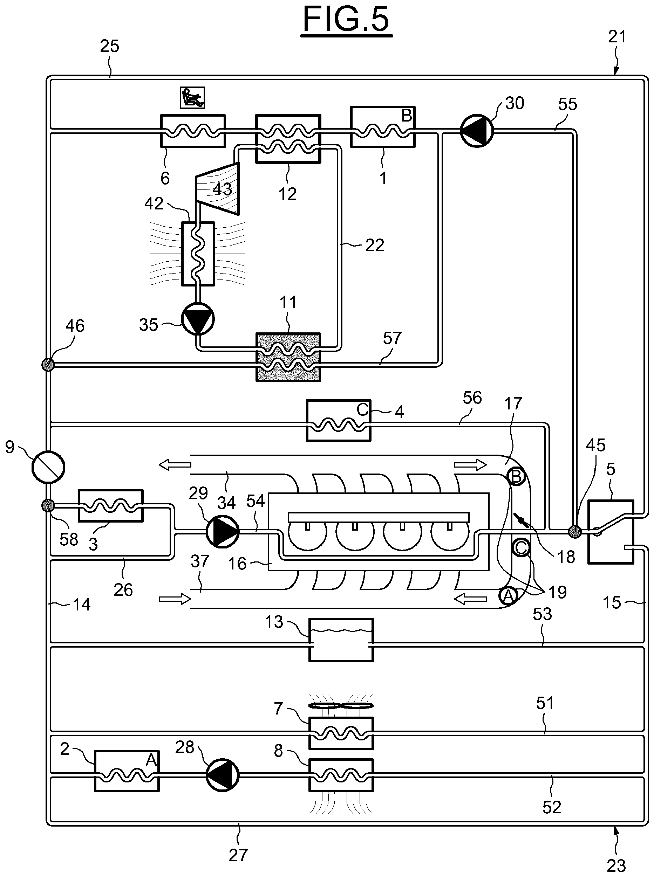

In the example illustrated in Figure 5, the evaporator 11 of the second circuit 22 is supplied with coolant by a dedicated pipe 57 of the first circuit 21. The pipe 57 is mounted in parallel with a portion of the pipe 55 bearing the first cooling exchanger 1, the superheater 12 and the unit heater 6. This dedicated pipe 57 is positioned downstream of the pump 30. Some of the coolant that has passed through the pipe 30 gives up the heat energy acquired from the engine 16 to the evaporator 11. The rest of the fluid passing through the pump 30 collects additional heat energy in the first cooling exchanger 1 then gives up all or some of this heat energy to the superheater 12. The superheater 12 is thus supplied with coolant that is hotter than the coolant that passes through the evaporator 11. Having passed through the superheater 12, the still relatively hot coolant passes through the unit heater 6 where it may contribute to giving up heat energy to the vehicle cabin air.

In the embodiment illustrated in Figure 6, the evaporator 11 is placed on the first fluid loop 31 downstream of the unit heater 6. It is situated between the second connection point 46 and the on/off valve 9. When the fourth cooling exchanger 4 of the EGR valve delivers coolant towards the on/off valve 9, this liquid therefore passes through the evaporator 11. Thus, the evaporator 11 has passing through it a coolant which in theory is at a lower temperature than the coolant passing through the evaporator 12. At the same time, the evaporator 11 benefits from the heat energy that has just been given up to the fourth cooling exchanger 4 by the recirculation circuit 17 at the EGR valve 18 thereof. Furthermore, the evaporator 11 collects heat energy from the fourth cooling exchanger 4, which energy will therefore not be returned to the engine 16, unlike in the embodiments of Figures 4 and 5.

Considering as an example the embodiment of Figure 3, Figures 7 to 9 illustrate various operating configurations of the energy recuperation system. The overall principle of operation can be read across to the embodiments of Figures 4 to 6.

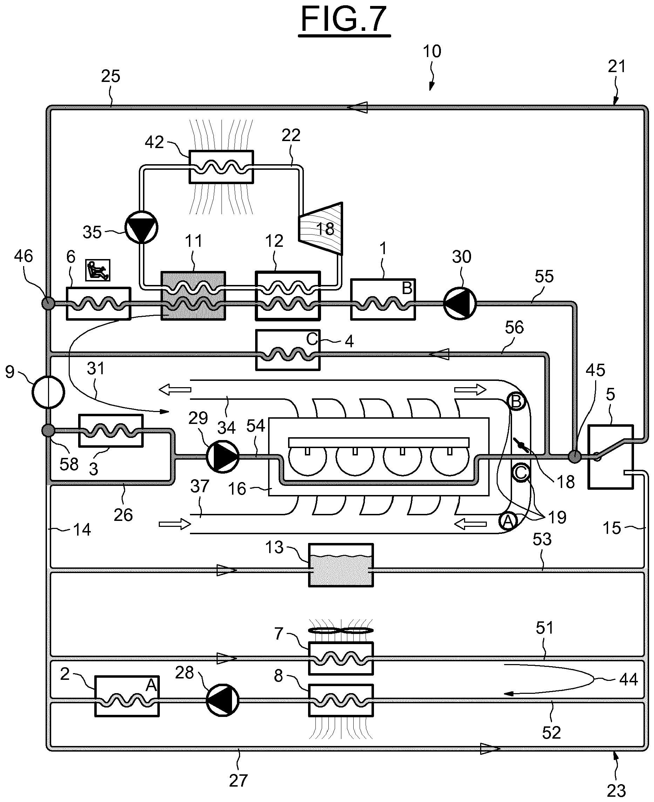

In Figure 7, the thermostat 5 is in the first position. The first cooling circuit 21 and the third cooling circuit 23 then operate independently without liquid being exchanged by the legs 14 and 15. The coolant leaving the engine 16 is split between the pipes 55, 56 and the equalizing leg 25.

The heat energy recuperated by the coolant at the engine 16, then at the first cooling exchanger 1, is used in a countercurrent exchange to be given up, partly to the superheater 12 and then partly to the evaporator 11 of the second circuit 22. As circulation is countercurrentwise between the first cooling circuit 21 and the second circuit 22, the fluid of the second circuit 22 of course passes first of all through the evaporator 11 before passing through the superheater 12.

Having given up heat energy to the second circuit 22, the coolant can heat up the vehicle cabin at the unit heater 6. In this configuration, the on/off valve 9 is open. In the third cooling circuit 23, the pump 28 establishes one or more circulation loops, notably the circulation loop 44 that passes in succession through the second cooling exchanger 2 or "cold EGR exchanger", the second radiator 7, the first radiator 8, before returning to the pump 28. The coolant leaving the second cooling exchanger 2 can also be delivered partly to the equalizing leg 27 and partly return to the reservoir 13.

This operational diagram illustrated in Figure 7 can be used when the engine 16 reaches a temperature at which it needs to be cooled and/or when the temperature of the engine 16 allows the coolant to be heated up sufficiently that usable energy can be supplied to the second circuit 22 and/or to the unit heater 6. At least some of the coolant then circulates through the first liquid loop 31 of the first circuit 21.

However, the system is configured to remain in this mode of operation only for as long as the coolant passing through the thermostat 5 does not exceed a threshold temperature. Below this coolant threshold temperature the use of the second circuit 22 and of the unit heater 6 allows the first cooling exchanger 1 or "hot EGR cooler" and the engine 16 to be kept at the maximum desirable operating temperatures for these elements.

When the vehicle starts up, the engine 16 does not initially need to be cooled, and/or the temperature of the engine 16 is not high enough to obtain satisfactory efficiency of the second circuit 22 and/or for the unit heater 6 to heat the cabin sufficiently. When the temperature of the engine is below a threshold temperature, the on/off valve 9 can therefore be closed.

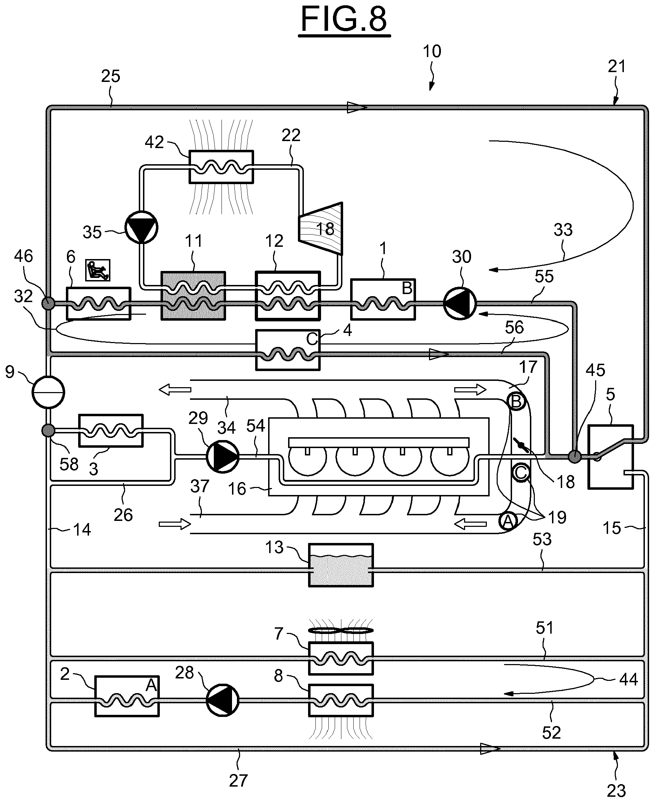

This then is the configuration illustrated in Figure 8. The valve 9 may for example be opened or closed using an electronic control unit (not depicted). The pump 29 runs dry or may then be disengaged if it is a mechanical pump or may even be switched off if it is an electric pump. A circulation of coolant through the first circuit 21 then becomes established in the liquid loops 32 and 33 mentioned hereinabove. These "short" loops allow the heat energy available at the first cooling exchanger 1 and at the fourth cooling exchanger 4 of the EGR valve to be put to use quickly without the coolant passing through the engine 16. The diagram of the circulation of fluid through the third circuit 23 remains identical to that of Figure 7. Note that in the embodiment of Figure 8, the closed on/off valve 9 also prevents coolant from passing through the third cooling exchanger 3 associated with the engine oil circuit, which is likewise not hot enough.

When the engine 16 is hot and the temperature of the fluid leaving the engine 16 exceeds the threshold temperature of the thermostat 5, the thermostat 5 switches into the second position.

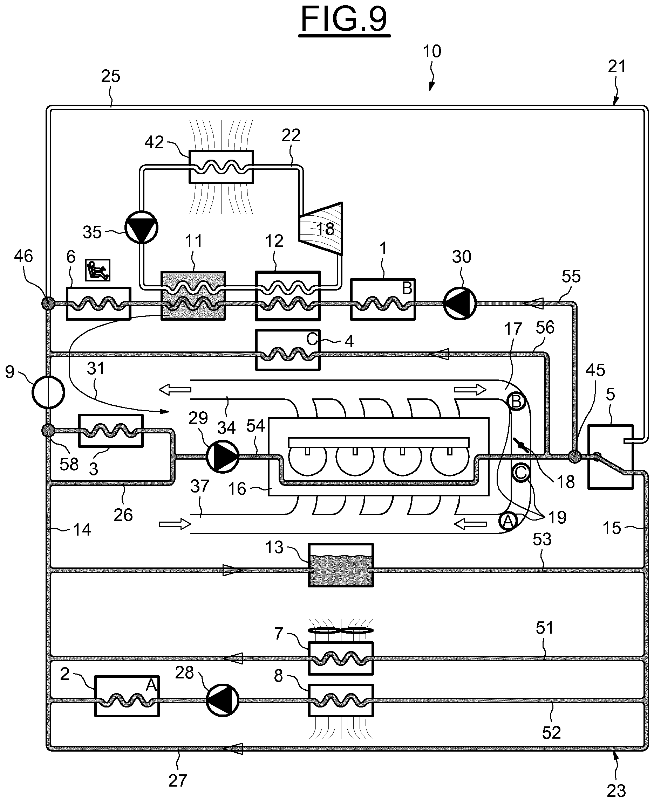

The system then finds itself in the configuration of Figure 9. Some of the coolant leaving the engine 16 is thus directed towards the second radiator 7 of the vehicle - which can be referred to as the main cooling radiator that cools the engine 16 - and another proportion of the fluid leaving the engine 16 is directed towards the first radiator 8 where the liquid is partially cooled before passing through the second cooling exchanger 2 or "cold EGR exchanger". Some of the liquid leaving the second exchanger 2 passes through the equalizing leg 27 to return to the engine 16.

Some of the fluid leaving the engine 16 is still sent into the first circuit 21, notably into the fourth cooling exchanger 4 and the first cooling exchanger 1. The fluid that has passed through the first cooling exchanger 1 is then used as a hot source for the second circuit 22 and, if need be, for the unit heater 6, in succession.

In this configuration illustrated in Figure 9, the two radiators 7 and 8 contribute to dissipating the heat energy from the coolant that has passed through the engine 16.

The invention is not restricted to the embodiments described and may be passed on in numerous alternative forms. The invention is particularly suited to engines of the diesel engine type, notably to vehicle engines, but may also be applied to stationary engines, for example electric generator sets. The unit heater may then be omitted.

The various pumps 28, 29, 30 may be positioned differently from their positions illustrated in the figures. For example, the pump 29 could be situated upstream of the third cooling exchanger 3, or could be positioned between the engine 16 and the branching 45. The pump 30 could be positioned at other locations along the pipe 55. The condenser 42 may, in order to limit the overall size of the vehicle fluid circuits, and installation costs, be a condenser that is common to the condenser of a vehicle air conditioning circuit. The fluid used in the Rankine circuit may be the same as that used in the air conditioning circuit. The condenser may then have just one inlet at which both the vaporized fluid from the Rankine circuit and the vaporized fluid of the air conditioning circuit arrives, and have just one outlet delivering the same fluid which is liquefied before it is split again between the second circuit 22 and the air conditioning circuit (not depicted).

The first radiator 8 may be smaller in size than the second radiator 7 which needs to provide effective cooling of the engine 16 when the latter so requires. The first radiator 8 may potentially be positioned in line with the radiator 7, the two radiators having the same stream of air passing through them. In another alternative form of embodiment, the two radiators may be positioned in such a way that mutually independent streams of air pass through them.

The reservoir 13 is preferably positioned on the third circuit 23. This improves the permeability of the third circuit 23. In the leg bearing the reservoir 13, the fluid may always circulate in one and the same direction, regardless as to whether the thermostat 5 is in the first position or in the second position.

Alternative forms of embodiment in which a second reservoir is positioned on the first coolant circuit 21 are conceivable.

The pump 35 of the second circuit 22 may be either a mechanical pump connected to an output shaft of the engine 16, or an adjustable output pump, for example an electric pump.

The pump 29 situated near the engine may be a mechanical pump driven by the engine and may potentially be disengageable so that it does not slow the engine 16 down when the engine is performing a cold start. In a preferred alternative form of embodiment, this pump 29 may be a variable output pump, for example an electric pump. The pumps 28 and 30 are preferably variable output electric pumps.

The coolant circulation system proposed in the invention allows use to be made of heat energy that can be exploited by the Rankine circuit and/or by the unit heater 6, even when the engine 16 has only just started. This system also allows effective cooling of the engine 16 once this engine reaches its cruising speed.

Thanks to the combined use of two EGR coolers, namely a "hot" EGR cooler 1 and a "cold" EGR cooler 2 in series with respect to the recirculated gas circuit, the temperature of the gases returned to the intake side of the engine can be regulated effectively while at the same time limiting the temperature gradient of the gases between the input and output of each of the coolers and therefore limiting the fouling of the recirculation circuit 17.

According to one advantageous embodiment, each of these cooling exchangers 1 and 2 can be "short-circuited": the recirculated gases can be sent to a first and/or a second gas bypass duct that returns these gases to the intake side of the engine without them passing through the first and/or without them passing through the second cooler. It is thus possible sometimes to use just one of the two coolers, depending for example on the air temperature outside the vehicle and the recirculated gas flow rate.

When the recirculated gas valve 18 is closed, or when the recirculated gases are not sent to the first cooler 1, the second Rankine circuit may potentially continue to operate and to deliver mechanical energy, even in smaller quantities than when heat energy is being recuperated by the first cooler. This option is of course dependent on the temperature of the engine 16, the temperature of the EGR valve 4, and the location of the first coupling exchanger 11 in the circuit (alternative forms of Figures 3 to 6).

Note that the "second Rankine circuit" is in theory the only Rankine circuit in the system, the term "second" referring merely to the fact that it is the second fluid circuit mentioned in the description. Likewise, the first and third coolant circuits may be the only two coolant circuits in the system.

## Claims

1. System (10) for recuperating energy for a motor vehicle equipped with an internal combustion engine (16), comprising a recirculation circuit (17) for the partial recirculation of the engine exhaust gases, and comprising a first coolant circuit (21) passing through the engine (16) and passing through a first cooling exchanger (1) configured to collect heat energy from the recirculation circuit (17), the energy recuperation system further comprising a second circuit (22) through which there circulates a state-change fluid able to mechanically drive an output shaft of an expansion machine (43) of the second circuit (22),
**characterized in that** the first circuit (21) comprises at least one first coupling exchanger (11) serving as a hot source for the second circuit (22), and **in that** the system (10) comprises a third coolant circuit (23) comprising a second cooling exchanger (2) able to collect heat energy from the recirculation circuit (17), the first circuit (21) and the third circuit (23) being positioned in such a way that the circulation of coolant through the first circuit (21) and through the third circuit (23) can be independent, the system comprising a thermostat (5) configured to switch between a first position in which the circulations of coolant through the first circuit (21) and the third circuit (23) are independent of one another, and a second position in which at least some of the liquid passing through the engine (16) also passes through the second cooling exchanger (2).

2. System according to Claim 1, in which the thermostat (5) is configured to switch into the first position when the liquid temperature detected by the thermostat (5) is below a threshold temperature, and to switch into the second position when the liquid temperature detected is above the same threshold temperature.

3. System according to Claim 1 or 2, comprising, on the third circuit (23), a first radiator (8) able to give up heat energy from the third circuit (23) to the atmosphere outside the vehicle.

4. System according to Claim 3, in which the first radiator (8) is mounted in series with the second cooling exchanger (2).

5. System according to Claim 4, further comprising, on the third circuit (23), a second radiator (7) able to give up heat energy from the third circuit (23) to the atmosphere outside, the second radiator (7) being mounted in parallel with the second cooling exchanger (2).

6. System according to one of the preceding claims, in which the first circuit (21) comprises a unit heater (6) able to give up heat energy from the first circuit (21) to the vehicle cabin air, and in which the first circuit (21) comprises a first coolant loop (31) equipped with at least one pump (29, 30) configured to circulate the liquid of the first loop (31) successively through the engine (16), the first cooling exchanger (1) and the unit heater (6).

7. System according to Claim 6, in which the first circuit (21) further comprises at least one bypass leg (25, 56) connected in such a way that the coolant can be circulated through the first cooling exchanger (1) then the unit heater (6), without passing via the engine.

8. System according to either of Claims 6 and 7, in which the first circuit (21) further comprises a second coupling exchanger (12) serving as a hot source for the second circuit (22), placed on the first liquid loop (31).

9. Method for recuperating energy for a motor vehicle equipped with an internal combustion engine (16), in which use is made of a first coolant circuit (21) that cools the engine (16) to collect heat energy from an exhaust gas recirculation circuit (17) of the vehicle and to transmit at least some of the collected heat energy to a second state-change fluid circuit (22), **characterized in that** use is made of a third coolant circuit (23), likewise configured to collect heat energy from the gas recirculation circuit (17), and **in that** the first circuit (21) and the third circuit (23) are connected when the temperature of the coolant leaving the engine (16) is above a threshold temperature, and **in that** coolant is made to circulate through the first circuit (21) and through the third circuit (23) independently, when that is not the case.

## Patentansprüche

1. System (10) zur Rückgewinnung von Energie für ein mit einem Verbrennungsmotor (16) ausgestattetes Kraftfahrzeug, umfassend einen Rückführungskreislauf (17) für die teilweise Rückführung der Abgase des Motors und umfassend einen ersten Kühlmittelkreislauf (21), der durch den Motor (16) und durch einen ersten Kältetauscher (1) führt, der so ausgelegt ist, dass er Wärmeenergie aus dem Rückführungskreislauf (17) sammelt, wobei das System zur Rückgewinnung von Energie ferner einen zweiten Kreislauf (22) umfasst, durch den ein einer Zustandsänderung unterliegendes Fluid zirkuliert, das in der Lage ist, eine Abtriebswelle einer Expansionsmaschine (43) des zweiten Kreislaufs (22) mechanisch anzutreiben,
**dadurch gekennzeichnet, dass** der erste Kreislauf (21) wenigstens einen ersten Kupplungstauscher (11) umfasst, der als Wärmequelle für den zweiten Kreislauf (22) dient, und dass das System (10) einen dritten Kühlmittelkreislauf (23) umfasst, der einen zweiten Kältetauscher (2) umfasst, der in der Lage ist, Wärmeenergie aus dem Rückführungskreislauf (17) zu sammeln, wobei der erste Kreislauf (21) und der dritte Kreislauf (23) auf eine solche Weise positioniert sind, dass die Zirkulation des Kühlmittels durch den ersten Kreislauf (21) und durch den dritten Kreislauf (23) unabhängig voneinander erfolgen kann, wobei das System einen Thermostat (5) umfasst, der so ausgelegt ist, dass er zwischen einer ersten Stellung, in der die Zirkulationen des Kühlmittels durch den ersten Kreislauf (21) und den dritten Kreislauf (23) unabhängig voneinander erfolgen, und einer zweiten Stellung, in der wenigstens ein Teil der durch den Motor (16) strömenden Flüssigkeit auch durch den zweiten Kältetauscher (2) strömt, umschaltet.

2. System nach Anspruch 1, bei dem der Thermostat (5) so ausgelegt ist, dass er in die erste Stellung schaltet, wenn die durch den Thermostat (5) erkannte Flüssigkeitstemperatur unter einem Temperaturschwellenwert liegt, und dass er in die zweite Stellung schaltet, wenn die erkannte Flüssigkeitstemperatur über dem gleichen Temperaturschwellenwert liegt.

3. System nach Anspruch 1 oder 2, das in dem dritten Kreislauf (23) eine erste Heizung (8) umfasst, die in der Lage ist, Wärmeenergie aus dem dritten Kreislauf (23) in die Atmosphäre außerhalb des Fahrzeugs abzugeben.

4. System nach Anspruch 3, bei dem die erste Heizung (8) in Reihe mit dem zweiten Kältetauscher (2) geschaltet ist.

5. System nach Anspruch 4, das ferner in dem dritten Kreislauf (23) eine zweite Heizung (7) umfasst, die in der Lage ist, Wärmeenergie aus dem dritten Kreislauf (23) nach außen in die Atmosphäre abzugeben, wobei die zweite Heizung (7) parallel zu dem zweiten Kältetauscher (2) geschaltet ist.

6. System nach einem der vorhergehenden Ansprüche, bei dem der erste Kreislauf (21) eine Geräteheizung (6) umfasst, die in der Lage ist, Wärmeenergie aus dem ersten Kreislauf (21) in die Luft des Fahrgastraums des Fahrzeugs abzugeben, und bei dem der erste Kreislauf (21) eine erste Kühlmittelschleife (31) umfasst, die mit wenigstens einer Pumpe (29, 30) ausgestattet ist, die so ausgelegt ist, dass sie die Flüssigkeit der ersten Schleife (31) sukzessive durch den Motor (16), den ersten Kältetauscher (1) und die Geräteheizung (6) in Umlauf bringt.

7. System nach Anspruch 6, bei dem der erste Kreislauf (21) ferner wenigstens einen Umleitungsstrang (25, 56) umfasst, der auf eine solche Weise geschaltet ist, dass das Kühlmittel durch den ersten Kältetauscher (1) und danach durch die Geräteheizung (6) zirkuliert werden kann, ohne durch den Motor geleitet zu werden.

8. System nach einem der Ansprüche 6 oder 7, bei dem der erste Kreislauf (21) ferner einen zweiten Kupplungstauscher (12) umfasst, der als Wärmequelle für den zweiten Kreislauf (22) dient und an der ersten Flüssigkeitsschleife (31) platziert ist.

9. Verfahren zur Rückgewinnung von Energie für ein mit einem Verbrennungsmotor (16) ausgestattetes Kraftfahrzeug, bei dem ein erster den Motor (16) kühlender Kühlmittelkreislauf (21) genutzt wird, um Wärmeenergie aus einem Abgasrückführungskreislauf (17) des Fahrzeugs zu sammeln und wenigstens einen Teil der gesammelten Wärmeenergie zu einem zweiten Kreislauf (22) mit einem einer Zustandsänderung unterliegenden Fluid zu leiten, **dadurch gekennzeichnet, dass** ein dritter Kühlmittelkreislauf (23) genutzt wird, der ebenfalls so ausgelegt ist, dass er Wärmeenergie aus dem Gasrückführungskreislauf (17) sammelt, und dass der erste Kreislauf (21) und der dritte Kreislauf (23) verbunden sind, wenn die Temperatur des aus dem Motor (16) strömenden Kühlmittels über einem Temperaturschwellenwert liegt, und dass bewirkt wird, dass Kühlmittel unabhängig durch den ersten Kreislauf (21) und durch den dritten Kreislauf (23) zirkuliert, wenn dies nicht der Fall ist.

## Revendications

1. Système (10) pour récupérer de l'énergie pour un véhicule à moteur équipé d'un moteur à combustion interne (16), comprenant un circuit de recirculation (17) pour la recirculation partielle des gaz d'échappement du moteur, et comprenant un premier circuit d'agent de refroidissement (21) qui passe à travers le moteur (16) et qui passe à travers un premier échangeur de refroidissement (1) configuré de manière à collecter de l'énergie thermique à partir du circuit de recirculation (17), le système de récupération d'énergie comprenant en outre un deuxième circuit (22) à travers lequel circule un fluide à changement d'état qui est capable d'entraîner mécaniquement un arbre de sortie d'une machine d'expansion (43) du deuxième circuit (22),
**caractérisé en ce que** le premier circuit (21) comprend au moins un premier échangeur de refroidissement (11) qui sert de source chaude pour le deuxième circuit (22), et **en ce que** le système (10) comprend un troisième circuit d'agent de refroidissement (23) comprenant un second échangeur de refroidissement (2) capable de collecter de l'énergie thermique à partir du circuit de recirculation (17), le premier circuit (21) et le troisième circuit (23) étant positionnés de telle sorte que la circulation d'un agent de refroidissement à travers le premier circuit (21) et à travers le troisième circuit (23) puisse être indépendante, le système comprenant un thermostat (5) configuré de manière à commuter entre une première position dans laquelle les circulations d'un agent de refroidissement à travers le premier circuit (21) et le troisième circuit (23) sont indépendantes l'une de l'autre, et une seconde position dans laquelle au moins une partie du liquide qui passe à travers le moteur (16) passe également à travers le second échangeur de refroidissement (2).

2. Système selon la revendication 1, dans lequel le thermostat (5) est configuré de manière à basculer dans la première position lorsque la température de liquide détectée par le thermostat (5) est inférieure à une température de seuil, et à basculer dans la seconde position lorsque la température de liquide détectée est supérieure à la même température de seuil.

3. Système selon la revendication 1 ou 2, comprenant, sur le troisième circuit (23), un premier radiateur (8) capable de céder de l'énergie thermique en provenance du troisième circuit (23) dans l'atmosphère à l'extérieur du véhicule.

4. Système selon la revendication 3, dans lequel le premier radiateur (8) est monté en série avec le second échangeur de refroidissement (2).

5. Système selon la revendication 4, comprenant en outre, sur le troisième circuit (23), un second radiateur (7) capable de céder de l'énergie thermique en provenance du troisième circuit (23) dans l'atmosphère extérieure, le second radiateur (7) étant monté en parallèle avec le second échangeur de refroidissement (2).

6. Système selon l'une des revendications précédentes, dans lequel le premier circuit (21) comprend une unité de chauffage (6) capable de céder de l'énergie thermique en provenance du premier circuit (21) dans l'air de l'habitacle du véhicule, et dans lequel le premier circuit (21) comprend une première boucle de refroidissement (31) équipée d'au moins une pompe (29, 30) configurée de manière à faire circuler le liquide de la première boucle (31) successivement à travers le moteur (16), le premier échangeur de refroidissement (1) et l'unité de chauffage (6).

7. Système selon la revendication 6, dans lequel le premier circuit (21) comprend en outre au moins un embranchement de dérivation (26, 56) qui est connecté de telle sorte que l'agent de refroidissement puisse être mis en circulation à travers le premier échangeur de refroidissement (1) et ensuite l'unité de chauffage (6), sans passer par le moteur.

8. Système selon l'une ou l'autre des revendications 6 et 7, dans lequel le premier circuit (21) comprend en outre un second échangeur de refroidissement (12) qui sert de source chaude pour le deuxième circuit (22) et qui est placé sur la première boucle de liquide (31).

9. Procédé pour récupérer de l'énergie pour un véhicule à moteur équipé d'un moteur à combustion interne (16), dans lequel il est fait usage d'un premier circuit d'agent de refroidissement (21) qui refroidit le moteur (16) afin de collecter de l'énergie thermique à partir d'un circuit de recirculation de gaz d'échappement (17) du véhicule et de transmettre au moins une partie de l'énergie thermique collectée à un deuxième circuit de fluide à changement d'état (22), **caractérisé en ce qu'**il est fait usage d'un troisième circuit d'agent de refroidissement (23), pareillement configuré de manière à collecter de l'énergie thermique en provenance du circuit de recirculation de gaz (17), et **en ce que** le premier circuit (21) et le troisième circuit (23) sont connectés lorsque la température de l'agent de refroidissement qui quitte le moteur (16) est supérieure à une température de seuil, et **en ce que** l'agent de refroidissement est mis en circulation à travers le premier circuit (21) et à travers le troisième circuit (23) de façon indépendante, lorsque cela n'est pas le cas.
